# EUROPEAN PATENT APPLICATION

(11) **EP 2 957 992 A2**
(43) Date of publication of application: **23.12.2015**
(21) Application number: 15171472.2
(22) Date of filing: 10.06.2015
(51) Int. Cl.: G06F 3/01, G06F 3/0346

(54) **METHODS AND SYSTEMS FOR COMMENCING THE EXECUTION OF TASKS ON AN ELECTRONIC DEVICE**

(30) Priority: 18.06.2014 TW 103120968
(71) Applicant: Noodoe Corporation, Taipei City 115 (TW)
(72) Inventor: HSU, Chin-Feng, 115 Taipei City (TW)
(74) Representative: Karakatsanis, Georgios

(57) **Abstract**

Methods and systems for commencing the execution of tasks on an electronic device (200) are provided. First, the orientation of the electronic device (200) is detected. When an instruction is received, the orientation of the electronic device (200) is analyzed, and a specific task is performed according to the analyzed orientation.

## Description

### BACKGROUND

### Technical Field

The disclosure relates generally to task management methods and systems, and, more particularly to methods and systems that commence the execution of tasks according to the orientation of an electronic device.

### Description of the Related Art

Recently, electronic devices, such as smart phones, notebooks, wearable devices, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

Generally, various user interfaces can be provided in an electronic device for operating corresponding functions and applications in that device. Typically, a portable device can have at least one input tool, such as a physical button or a touch-sensitive screen. Users can use their fingers to input commands to the device via the physical button or the touch-sensitive screen to operate the user interfaces, and switch between items, such as applications in the user interfaces.

The technology of operating devices in a touch manner has indeed changed the human behavior of operating electronic devices, and has brought forward remarkable benefits. However, users must concentrate on watching the screen of an electronic device to know the operation status of user interfaces. In some aspects, users cannot concentrate on watching the screen. In particular for drivers, it is hard to accurately operate user interfaces. Additionally, when an electronic device has a lot of applications, it is hard for users to find a specific application from the user interface, and repeated operating behaviors will result in a waste of system resources.

### SUMMARY

Methods and systems for commencing the execution of tasks on an electronic device are provided, wherein the execution of tasks is commenced according to the orientation of the electronic device.

In an embodiment of a method for commencing the execution of tasks on an electronic device, the orientation of the electronic device is detected via at least one sensor. Then, a first instruction is received, and in response to the first instruction, a first orientation of the electronic device when the first instruction is received is recorded. Then, a specific task is performed according to the first orientation of the electronic device.

An embodiment of a system for commencing the execution of tasks on an electronic device comprises at least one sensor, a reception unit, and a processing unit. The sensor detects the orientation of the electronic device. The reception unit receives a first instruction. In response to the first instruction, the processing unit records a first orientation of the electronic device when the first instruction is received, and performs a specific task according to the first orientation of the electronic device.

In some embodiments, the specific task is performed according to the first instruction and the first orientation of the electronic device.

In some embodiments, the first instruction comprises a movement, a sound, a trigger corresponding to a button, an appearance corresponding to an object, and/or a contact on a touch-sensitive device.

In some embodiments, when the specific task is performed, a specific application is selected and activated from a plurality of applications according to the first orientation of the electronic device.

In some embodiments, when the specific task is performed, specific data is generated according to the first orientation of the electronic device. In some embodiments, the specific data comprises a specific command, a silence in an encoding system, and/or encoding data in an encoding system.

In some embodiments, a second instruction is further received. In response to the second instruction, a second orientation of the electronic device when the second instruction is received is recorded, and the specific task is performed according to the first orientation and the second orientation. In some embodiments, the specific task is performed according to the first instruction, the second instruction, and the first orientation and the second orientation of the electronic device.

In some embodiments, the first orientation comprises a first included angle between an axis which is vertical to at least one plane of the electronic device and the direction of gravity.

In some embodiments, the first orientation comprises angle information corresponding to the electronic device in reference to at least one reference point.

Methods for commencing the execution of tasks on an electronic device may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for commencing the execution of tasks on an electronic device of the invention;
Figs. 2A and 2B are schematic diagrams illustrating embodiments of examples of orientations of the electronic device of the invention;
Fig. 3 is a flowchart of an embodiment of a method for commencing the execution of tasks on an electronic device of the invention;
Fig. 4 is a flowchart of another embodiment of a method for commencing the execution of tasks on an electronic device of the invention;
Fig. 5 is a flowchart of another embodiment of a method for commencing the execution of tasks on an electronic device of the invention;
Fig. 6 is a flowchart of another embodiment of a method for commencing the execution of tasks on an electronic device of the invention;
Figs. 7A and 7B are schematic diagrams illustrating embodiments of an example of commencing the execution of tasks on an electronic device of the invention; and
Figs. 8A and 8B are schematic diagrams illustrating embodiments of another example of commencing the execution of tasks on an electronic device of the invention.

### DETAILED DESCRIPTION OF THE INVENTION

Methods and systems for commencing the execution of tasks on an electronic device are provided.

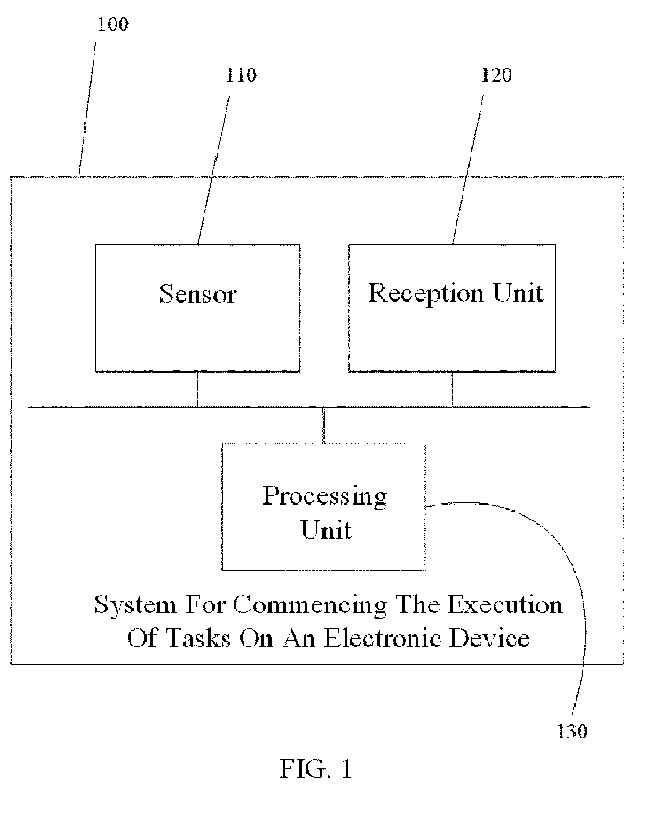

Fig. 1 is a schematic diagram illustrating an embodiment of a system for commencing the execution of tasks on an electronic device of the invention. As shown in Fig. 1, the system for commencing the execution of tasks on an electronic device 100 can be used in an electronic device. In some embodiments, the electronic device may be a portable device, such as a mobile phone, a smart phone, a PDA (Personal Digital Assistant), a GPS (Global Positioning System), a notebook, a tablet computer, or a wearable device.

The system for commencing the execution of tasks on an electronic device 100 comprises at least one sensor 110, a reception unit 120, and a processing unit 130. The sensor 110 can detect the orientation of an electronic device. In some embodiments, the sensor 110 may be an accelerometer such as a G-sensor for generating information of velocity and displacement when the electronic device moves. In some embodiments, the sensor 110 may be a Gyro sensor for generating information of angular acceleration when the electronic device moves. It is noted that, the above sensors are only examples of the present invention, and the present invention is not limited thereto. Any sensor which can detect the orientation of an electronic device can be applied in the present invention. The reception unit 120 can receive an instruction input to the electronic device. It is understood that, in some embodiments, the reception unit 120 may be the sensor 110 for detecting the movement of the electronic device. In some embodiments, the reception unit 120 may be a sound reception unit for receiving a sound around the electronic device. In some embodiments, the reception unit 120 may be a button, wherein an instruction is received when the button is triggered. In some embodiments, the reception unit 120 may be an optical unit, such as an IR sensor or an image capture unit for detecting an appearance corresponding to an object. In some embodiments, the reception unit 120 may be a touch-sensitive device for detecting a contact on the touch-sensitive device. That is the instruction received by the reception unit 120 can comprise a movement, a sound, a trigger corresponding to a button, an appearance corresponding to an object, and/or a contact on a touch-sensitive device. It is noted that, the above reception units and the received instructions are examples of the application, and the present invention is not limited thereto. The processing unit 130 can control related operations of hardware and software in the electronic device, and perform the methods for commencing the execution of tasks on an electronic device of the invention, which will be discussed later.

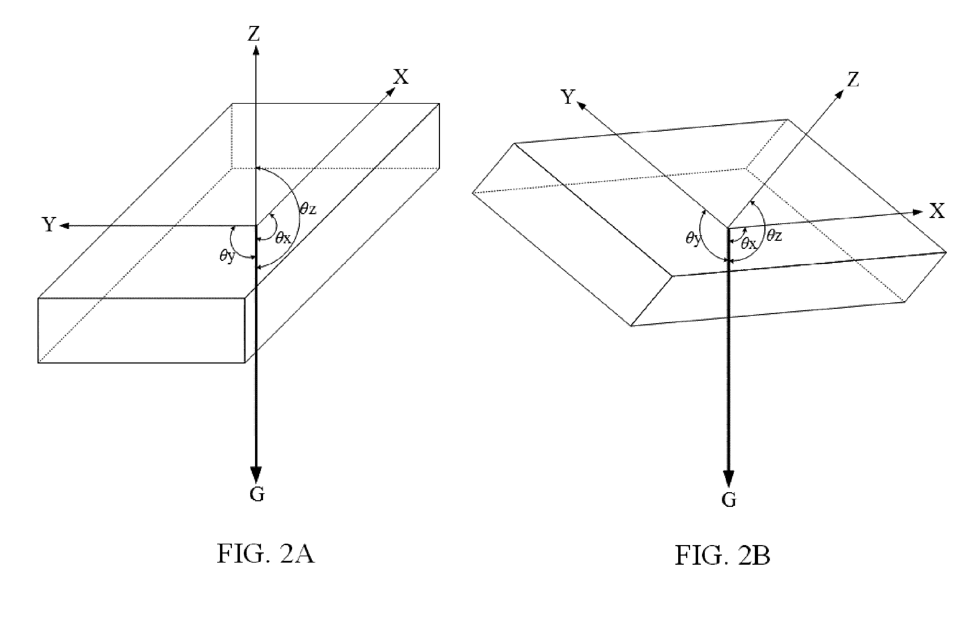

As described, the sensor 110 can detect the orientation of an electronic device. It is understood that, in some embodiments, the orientation comprises angle information corresponding to the electronic device in reference to at least one reference point. In some embodiments, the orientation can be represented as an included angle between an axis which is vertical to at least one plane of the electronic device and the gravity. Figs. 2A and 2B are schematic diagrams illustrating embodiments of examples of orientations of the electronic device of the invention. As shown in Fig. 2A, the electronic device 200 has planes in three directions, and X, Y, and Z axes, which are vertical to the respective planes. It is noted that, there are included angles *θ*x, *θ*y, and *θ*z between the respective X, Y, and Z axes and the gravity direction G. When a user moves the electronic device 200, the included angle between the respective X, Y, and Z axes and the gravity direction G will be changed accordingly, as shown in Fig. 2B. The orientation of the electronic device can be represented by the included angles θx, θy, and θz between the respective X, Y, and Z axes and the gravity direction G.

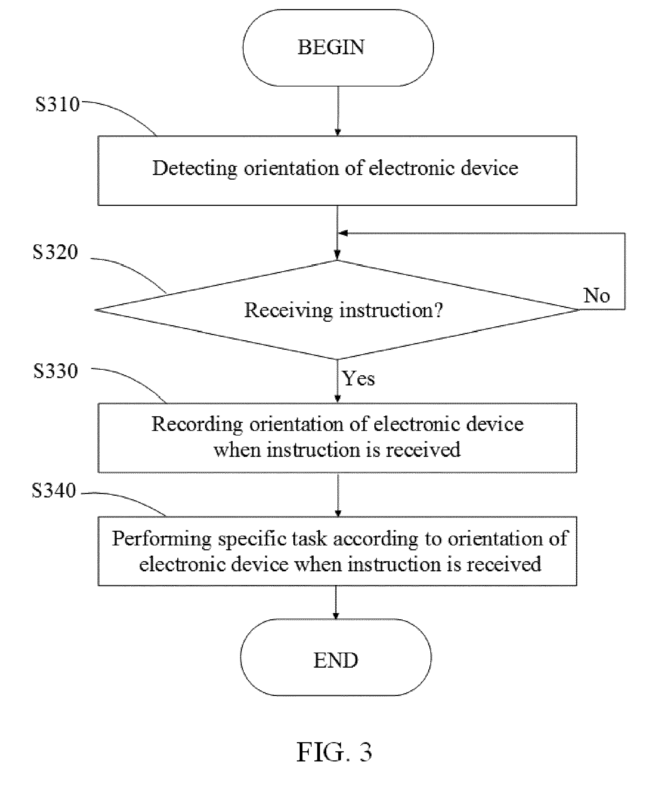

Fig. 3 is a flowchart of an embodiment of a method for commencing the execution of tasks on an electronic device of the invention. The method for commencing the execution of tasks on an electronic device of the invention can be used in an electronic device, such as a mobile phone, a smart phone, a PDA, a GPS, a notebook, a tablet computer, a wearable device, or other portable devices.

In step S310, the orientation of the electronic device is detected by at least one sensor. It is understood that, in some embodiments, the sensor may be an accelerometer. In some embodiments, the sensor may be a Gyro sensor. It is noted that, the above sensors are only examples of the present invention, and the present invention is not limited thereto. Any sensor which can detect the orientation of an electronic device can be applied in the present invention. It is understood that, in some embodiments, the orientation comprises angle information corresponding to the electronic device in reference to at least one reference point. In some embodiments, the orientation can be represented as an included angle between an axis which is vertical to at least one plane of the electronic device and the gravity. In step S320, it is determined whether an instruction is received. It is understood that, in some embodiments, the received instruction comprises a movement, a sound, a trigger corresponding to a button, an appearance corresponding to an object, and/or a contact on a touch-sensitive device. It is noted that, the above instructions are examples of the application, and the present invention is not limited thereto. When the instruction is not received (No in step S320), the procedure remains at step S320. When the instruction is received (Yes in step S320), in step S330, in response to the instruction, the orientation of the electronic device when the instruction is received is recorded. Then, in step S340, a specific task is performed according to the orientation of the electronic device. It is understood that, in some embodiments, when the specific task is performed, a specific application is selected and activated from a plurality of applications according to the orientation of the electronic device. In some embodiments, when the specific task is performed, specific data is generated according to the orientation of the electronic device. In some embodiments, the specific data comprises a specific command for instructing software of the electronic device to perform a process. In some embodiments, the specific data can be used to represent a silence and/or encoding data in an encoding system, such as Morse code or Braille system. For example, the short silence between two dots or dashes, the middle silence between two letters of a word, and the long silence between two words in the Morse code system can be represented by different specific data. The time needed for the silences in the Morse code system can be reduced by using the representation of various specific data, thereby improving the efficiency for generating and decoding Morse codes. Additionally, in the Braille system, each braille (encoding data) is defined by a specific braille character. Each braille may correspond to one unique specific data, which can be designed according to the corresponding rule of braille character. It is noted that, the above specific tasks are examples of the application, and the present invention is not limited thereto.

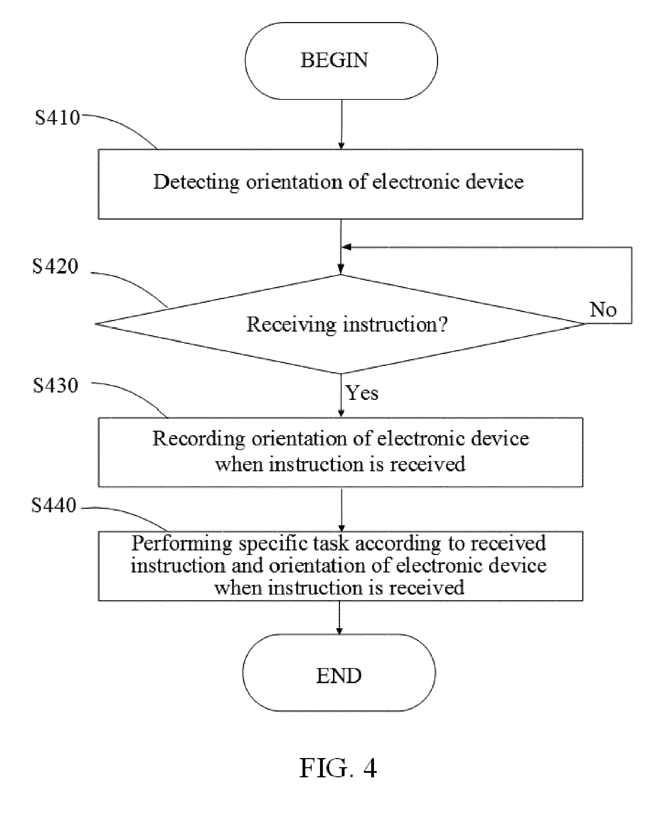

Fig. 4 is a flowchart of another embodiment of a method for commencing the execution of tasks on an electronic device of the invention. The method for commencing the execution of tasks on an electronic device of the invention can be used in an electronic device, such as a mobile phone, a smart phone, a PDA, a GPS, a notebook, a tablet computer, a wearable device, or other portable devices.

In step S410, the orientation of the electronic device is detected by at least one sensor. Similarly, in some embodiments, the sensor may be an accelerometer and/or a Gyro sensor. It is noted that, the above sensors are only examples of the present invention, and the present invention is not limited thereto. Any sensor which can detect the orientation of an electronic device can be applied in the present invention. It is understood that, in some embodiments, the orientation comprises angle information corresponding to the electronic device in reference to at least one reference point. In some embodiments, the orientation can be represented as an included angle between an axis which is vertical to at least one plane of the electronic device and the gravity. In step S420, it is determined whether an instruction is received. Similarly, in some embodiments, the received instruction comprises a movement, a sound, a trigger corresponding to a button, an appearance corresponding to an object, and/or a contact on a touch-sensitive device. It is noted that, the above instructions are examples of the application, and the present invention is not limited thereto. When the instruction is not received (No in step S420), the procedure remains at step S420. When the instruction is received (Yes in step S420), in step S430, in response to the instruction, the orientation of the electronic device when the instruction is received is recorded. It is noted that, the generation manner and content corresponding to the instruction will be recorded. Then, in step S440, a specific task is performed according to the received instruction and the orientation of the electronic device when the instruction is received. It is understood that, the electronic device can define the performed specific task corresponding to different instructions and orientations of the electronic device. For example, when a user inputs a sound instruction to the electronic device, and the orientation of the electronic device is a first orientation, the electronic device performs a recording process. When the user inputs the same sound instruction to the electronic device, and the orientation of the electronic device is a second orientation, the electronic device performs a playback process. When a user taps the electronic device, causing the electronic device moves, and the orientation of the electronic device is the first orientation, the electronic device performs a control function for home appliances. When the user taps the electronic device, causing the electronic device moves, and the orientation of the electronic device is the second orientation, the electronic device performs a dialing function. It is noted that, the above specific tasks are examples of the application, and the present invention is not limited thereto.

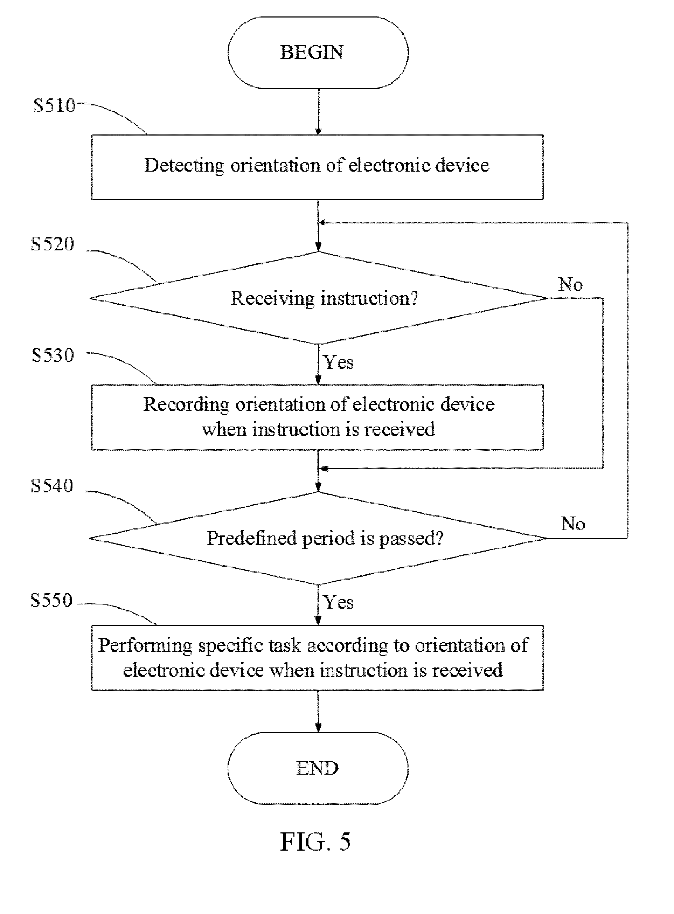

Fig. 5 is a flowchart of another embodiment of a method for commencing the execution of tasks on an electronic device of the invention. The method for commencing the execution of tasks on an electronic device of the invention can be used in an electronic device, such as a mobile phone, a smart phone, a PDA, a GPS, a notebook, a tablet computer, a wearable device, or other portable devices.

In step S510, the orientation of the electronic device is detected by at least one sensor. Similarly, in some embodiments, the sensor may be an accelerometer and/or a Gyro sensor. It is noted that, the above sensors are only examples of the present invention, and the present invention is not limited thereto. Any sensor which can detect the orientation of an electronic device can be applied in the present invention. It is understood that, in some embodiments, the orientation comprises angle information corresponding to the electronic device in reference to at least one reference point. In some embodiments, the orientation can be represented as an included angle between an axis which is vertical to at least one plane of the electronic device and the gravity. In step S520, it is determined whether an instruction is received. Similarly, in some embodiments, the received instruction comprises a movement, a sound, a trigger corresponding to a button, an appearance corresponding to an object, and/or a contact on a touch-sensitive device. It is noted that, the above instructions are examples of the application, and the present invention is not limited thereto. When the instruction is not received (No in step S520), the procedure goes to step S540. When the instruction is received (Yes in step S520), in step S530, in response to the instruction, the orientation of the electronic device when the instruction is received is recorded. Then, in step S540, it is determined whether a predefined period is passed. It is understood that, in some embodiments, the predefined period begins from the time when the first instruction is received. When the predefined period is not passed (No in step S540), the procedure returns to step S520. When the predefined period is passed (Yes in step S540), in step S550, a specific task is performed according to the recorded orientation of the electronic device when the at least one instruction is received. It is noted that, the present invention is not limited to any task.

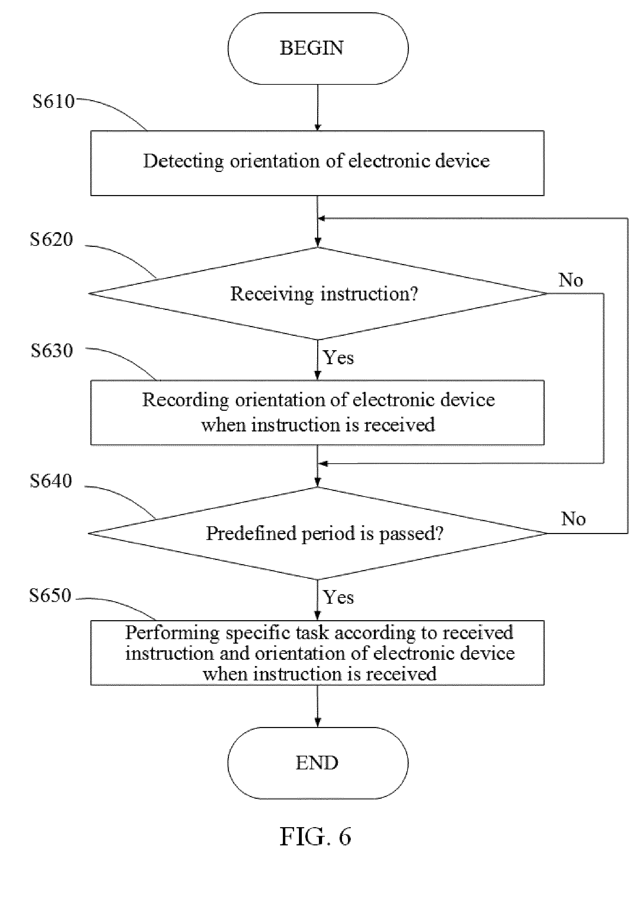

Fig. 6 is a flowchart of another embodiment of a method for commencing the execution of tasks on an electronic device of the invention. The method for commencing the execution of tasks on an electronic device of the invention can be used in an electronic device, such as a mobile phone, a smart phone, a PDA, a GPS, a notebook, a tablet computer, a wearable device, or other portable devices.

In step S610, the orientation of the electronic device is detected by at least one sensor. Similarly, in some embodiments, the sensor may be an accelerometer and/or a Gyro sensor. It is noted that, the above sensors are only examples of the present invention, and the present invention is not limited thereto. Any sensor which can detect the orientation of an electronic device can be applied in the present invention. It is understood that, in some embodiments, the orientation comprises angle information corresponding to the electronic device in reference to at least one reference point. In some embodiments, the orientation can be represented as an included angle between an axis which is vertical to at least one plane of the electronic device and the gravity. In step S620, it is determined whether an instruction is received. Similarly, in some embodiments, the received instruction comprises a movement, a sound, a trigger corresponding to a button, an appearance corresponding to an object, and/or a contact on a touch-sensitive device. It is noted that, the above instructions are examples of the application, and the present invention is not limited thereto. When the instruction is not received (No in step S620), the procedure goes to step S640. When the instruction is received (Yes in step S620), in step S630, in response to the instruction, the orientation of the electronic device when the instruction is received is recorded. It is noted that, the generation manner and content corresponding to the instruction will be recorded. Then, in step S640, it is determined whether a predefined period is passed. It is understood that, in some embodiments, the predefined period begins from the time when the first instruction is received. When the predefined period is not passed (No in step S640), the procedure returns to step S620. When the predefined period is passed (Yes in step S640), in step S650, a specific task is performed according to the received at least one instruction, and the recorded orientation of the electronic device when the at least one instruction is received. It is noted that, the present invention is not limited to any task.

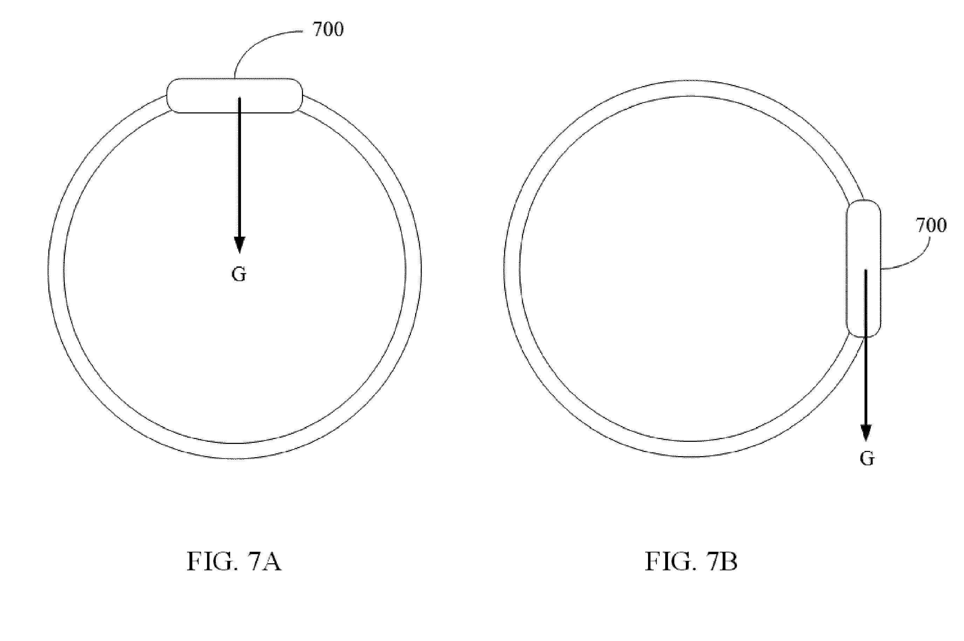

The application can be used in a wearable electronic device 700, as shown in Fig. 7A. A user can tap the wearable electronic device 700 or press a button (not shown in Fig. 7A) of the wearable electronic device 700 when the orientation of the device 700 points towards up. In response to the user's instruction (tap or button trigger), the wearable electronic device 700 can select and activate a first application from the applications in the wearable electronic device 700. The user can rotate the wearable electronic device 700 90 degrees, as shown in Fig. 7B, and tap the wearable electronic device 700 or press the button of the wearable electronic device 700. In response to the user's instruction (tap or button trigger), the wearable electronic device 700 can select and activate a second application from the applications in the wearable electronic device 700.

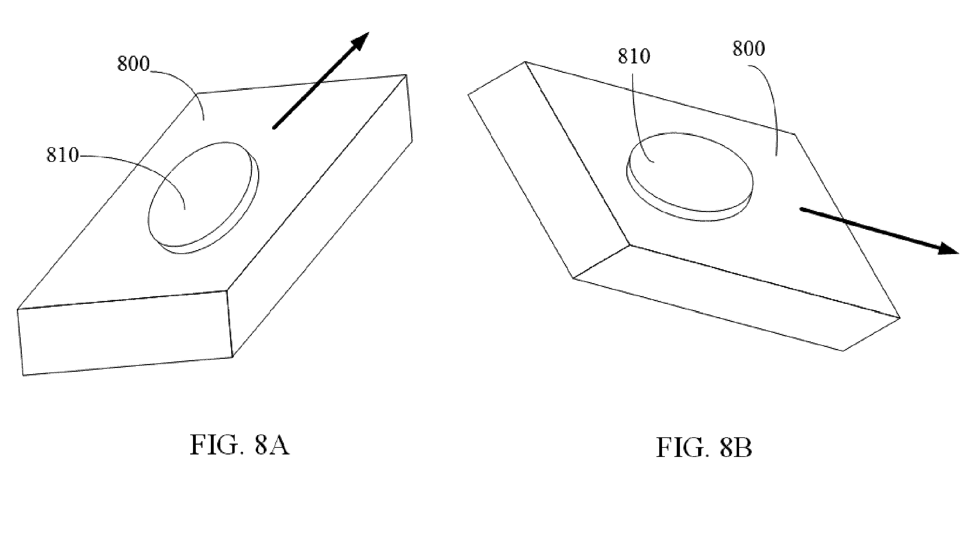

Figs. 8A and 8B are schematic diagrams illustrating embodiments of another example of commencing the execution of tasks on an electronic device of the invention. In the example, a remote controller 800 for a car can have a button 810 (reception unit). When a user holds the remote controller 800, causing the remote controller 800 towards top, and presses the button 810 (receiving instruction), the remote controller 800 can perform a function of locking the car doors, as shown in Fig. 8A. When the user holds the remote controller 800, causing the remote controller 800 towards down, and presses the button 810 (receiving instruction), the remote controller 800 can perform a function of unlocking the car doors, as shown in Fig. 8B.

Therefore, the methods and systems for commencing the execution of tasks on an electronic device of the present invention can perform tasks according to the orientation of the electronic device, thereby providing more convenient and efficient operational manners for commencing tasks.

Methods for commencing the execution of tasks on an electronic device may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for commencing the execution of tasks on an electronic device (200) for use in an electronic device (200), comprising:
detecting the orientation of the electronic device (200) via at least one sensor (110);
receiving a first instruction;
in response to the first instruction, recording a first orientation of the electronic device (200) when the first instruction is received; and
performing a specific task according to the first orientation of the electronic device (200).

2. The method of claim 1, further comprising a step of performing the specific task according to the first instruction and the first orientation of the electronic device (200).

3. The method of claim 1 or 2, wherein the first instruction comprises a movement, a sound, a trigger corresponding to a button, an appearance corresponding to an object, or a contact on a touch-sensitive device.

4. The method of claim 1, 2 or 3, wherein when the specific task is performed, a specific application is selected and activated from a plurality of applications according to the first orientation of the electronic device.

5. The method of claim 1, 2 or 3, wherein when the specific task is performed, specific data is generated according to the first orientation of the electronic device.

6. The method of claim 5, wherein the specific data comprises a specific command, a silence in an encoding system, or encoding data in an encoding system.

7. The method of claim 1, 2, 3, 4, 5 or 6 further comprising:
receiving a second instruction;
in response to the second instruction, recording a second orientation of the electronic device (200) when the second instruction is received; and performing the specific task according to the first orientation and the second orientation.

8. The method of claim 7, further comprising performing the specific task according to the first instruction, the second instruction, and the first orientation and the second orientation of the electronic device (200).

9. The method of claim 1, 2, 3, 4, 5, 6, 7 or 8, wherein the first orientation comprises a first included angle between an axis which is vertical to at least one plane of the electronic device (200) and the gravity.

10. The method of claim 1, 2, 3, 4, 5, 6, 7 or 8, wherein the first orientation comprises angle information corresponding to the electronic device (200) in reference to at least one reference point.

11. A system (100) for commencing the execution of tasks on an electronic device (200) for use in an electronic device (200), comprising:
a sensor (110) detecting the orientation of the electronic device;
a reception unit (120) receiving a first instruction; and
a processing unit (130), in response to the first instruction, recording a first orientation of the electronic device (200) when the first instruction is received, and performing a specific task according to the first orientation of the electronic device (200).

12. A machine-readable storage medium comprising a computer program, which, when executed, causes a device to perform a method for commencing the execution of tasks on an electronic device for use in an electronic device, wherein the method comprises:
detecting the orientation of the electronic device (200) via at least one sensor (110);
receiving a first instruction;
in response to the first instruction, recording a first orientation of the electronic device (200) when the first instruction is received; and
performing a specific task according to the first orientation of the electronic device (200).
